# EUROPEAN PATENT SPECIFICATION

(11) **EP 2 506 101 B1**
(45) Date of publication and mention of the grant of the patent: **10.01.2018**
(21) Application number: 12161430.9
(22) Date of filing: 27.03.2012
(51) Int. Cl.: G05B 19/042, G05B 9/03

(54) **Hart channel interface component including redundancy**
HART-Kanalschnittstellenkomponente mit Redundanz
Composant d'interface de canal hart comprenant une redondance

(30) Priority: 29.03.2011 US 201113074781
(43) Date of publication of application: 03.10.2012
(73) Proprietor: General Electric Company, Schenectady, NY 12345 (US)
(72) Inventor: Alley, Daniel Milton, Salem, VA 24153 (US); Henderson, Bruce Cameron, Salem, VA 24153 (US); Shen, Longhui, 201203 Pudong-Shanghai (CN)
(74) Representative: Fischer, Jens Peter

(56) References cited:
- EP-A2- 1 819 028
- EP-A2- 2 166 708
- US-A- 5 982 595
- US-A1- 2003 023 795
- US-A1- 2005 288 799

## Description

### BACKGROUND OF THE INVENTION

The subject matter disclosed herein relates generally to a component within a control system. More particularly, the present disclosure related to a channel interface component including redundancy within a control system with highway addressable remote transfer (HART) channels.

A HART device is generally a sensor or an actuator that may be used, for example, to control or monitor a system, such as a steam turbine or a gas turbine. The HART device facilitates communication within the control system using the well-known HART protocol. A HART sensor device controls current flowing in a wire, while a HART actuator device is controlled by the current flowing in the wire. In accordance with HART protocol, these functions are performed over the current loop carrying a 4 to 20 milliampere (mA) signal that is superimposed with HART data tones.

HART devices are interfaced to the control system along a HART channel using modules that perform current loop measurements and current loop driving. However, if a fault occurs along the HART channel, then communication between the HART device and the control system will be interrupted in order to repair the channel and control of the HART device is delayed.

EP 2166708 describes a method to communicatively couple field devices to controllers in a process control system comprising decoupling from the first field device a first removable communication module configured to communicate using a first communication protocol and coupling to the first field device a second removable communication module configured to communicate using a second communication protocol. After coupling the second removable communication module, the first field device is configured to communicate using the second communication protocol. The first field device is coupled to a first communication channel on an input/output card when communicating using the first communication protocol and the first field device is coupled to the first communication channel on the input/output card when communicating using the second communication protocol.

### BRIEF DESCRIPTION OF THE INVENTION

Aspects of the invention provide for a HART channel interface component including redundancy. The present invention resides in a circuit as defined in the appended claims.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic diagram of a system according to embodiments of the invention.
FIG. 2 shows a detailed schematic diagram of a channel interface component according to embodiments of the invention.
FIG. 3 shows a flow diagram of an operational methodology for a system according to embodiments of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF EMBODIMENTS OF THE INVENTION

Various embodiments of the present invention are directed to a highway addressable remote transfer (HART) channel interface component that supports HART protocol signals for use in controlling and/monitoring a HART device. In these embodiments, each HART channel interface component includes a suicide relay switch to connect or disconnect the HART channel interface from the HART device. Technical effects associated with the various embodiments of the present invention allow for redundancy of the HART channel interface component and for uninterrupted communication between a control system and the HART device.

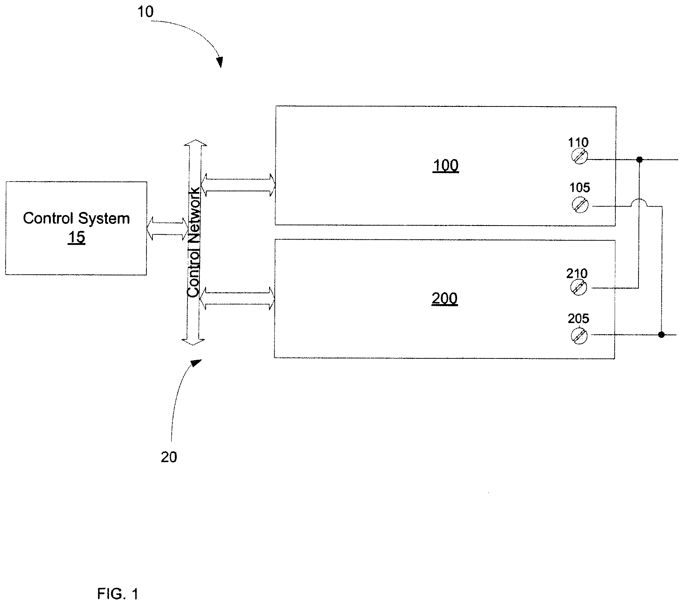

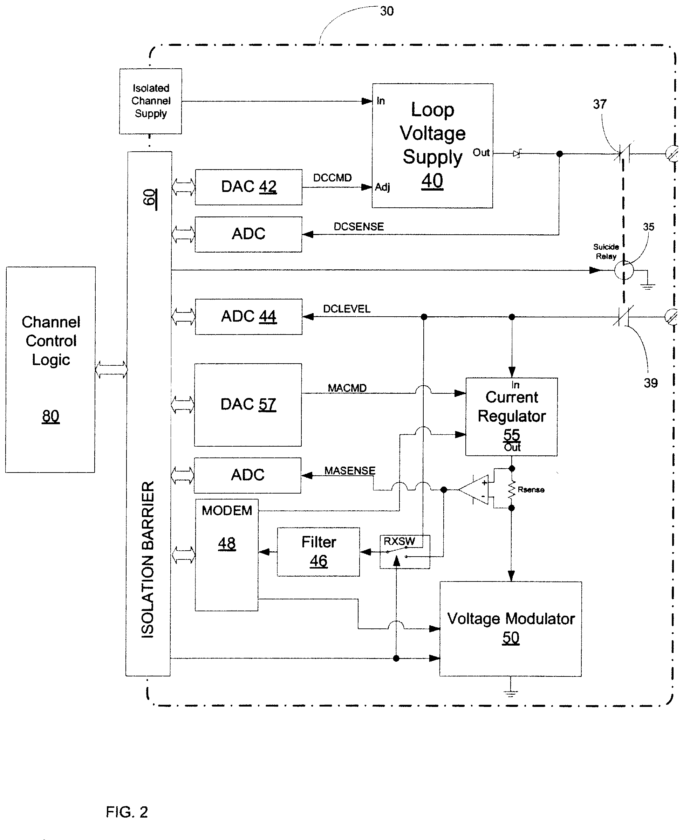

Referring now to the drawings, FIG. 1 shows a schematic diagram of a system 10 including a control system 15 in communication, through a control network 20, with a HART device over a first highway addressable remote transfer (HART) channel 100 or a second HART channel 200. Each channel 100, 200 includes an input terminal 105, 205 and an output terminal 110, 210 configured to connect with HART device via current loop (not shown). As will be shown in FIG. 2, each channel 100, 200 is coupled to a channel interface component 30 that is configured to connect or disconnect first HART channel 100 or second HART channel 200 from HART device.

In one embodiment, HART device may be a sensor or an actuator that is used in the control of a turbine. HART device is embedded with the "smarts" to facilitate communication with each channel interface component 30 (FIG. 2) using the well-known HART protocol.

Although system 10 of FIG. 1 is described with respect to use in the control of a turbine, those skilled in the art will recognize that the various embodiments of the present invention are not limited to use solely with monitoring and/or controlling a turbine. The various embodiments of the present invention have a diverse range of applications that are suitable for any environment that includes HART devices. Further, although system 10 of FIG. 1 is shown to include first HART channel 100 and second HART channel 200, it is understood that system 10 may include any number of channels as necessary for the environment of HART device.

Referring now to FIG. 2, a detailed diagram of channel interface component 30 is shown. Further, FIG. 2 shows a programmable channel control logic 80 that is coupled to channel interface component 30 and is configured to perform modulation and demodulation of HART protocol signals for communications with HART device.

As shown in FIG. 2, channel interface component 30 includes a suicide relay switch 35 that is configured to connect or disconnect the HART channel 100 from HART device. Although channel interface component 30 is described with respect to HART channel 100, it is understood that HART channel 200 includes the same channel interface component 30.

Suicide relay switch 35 is controlled by programmable channel control logic 80 and, according to the instructions of programmable channel control logic 80, closes or opens contacts 37, 39. If contacts 37, 39 are closed, then HART channel 100 is connected to HART device (i.e., HART channel 100 is considered the "master"). If contacts 37, 39 are open, then HART channel 100 is disconnected from HART device (i.e., HART channel 100 is considered the "slave"). This suicide relay switch 35 provides the redundancy of HART channel 100. If there is a fault along HART channel 100 (i.e., the "master"), programmable channel control logic 80 may send instructions for suicide relay switch 35 to disconnect HART channel 100 from HART device. Further, programmable channel control logic 80 may send instructions for suicide relay switch 35 to connect HART channel 200 to HART device (i.e., the new "master').

Referring back to FIG. 2, channel interface component 30 includes a loop voltage supply 40 that is configured to provide a voltage to HART device through terminals 105, 110. Programmable channel control logic 80 may specify a digital current setting that is converted to an analog current setting via a digital-to-analog converter (DAC) 42. The analog current setting (DCCMD) is provided to the loop voltage supply 40 to provide the voltage to HART device.

In the case that HART device includes a sensor, channel interface component 30 may include an analog-to-digital converter (ADC) 44 that digitally represents a measured current from the sensor. The ADC 44 provides the measured current ("DCSENSE") to programmable channel control logic 80. A voltage modulator 50 is provided for modulating the voltage across terminals 105, 110. In one embodiment, voltage modulator 50 may include a transformer and a transmit driver connected in series (not shown) or may include any other known circuit form. Channel interface component 30 also includes a current regulator 55. However, in the case of HART device including a sensor, the sensor will measure a current for the current loop (not shown). In this case, programmable channel control logic 80 will send instructions ("MACMD"), through DAC 57, to "short" or "saturate" current regulator 55. HART device, as a sensor, is sent tones by modulating the voltage across terminals 105, 110 by voltage modulator 50. The sensor responds by modulating the measured current via a current resistor 56 and ADC 59. In this way current regulator 55, as set to saturate by programmable channel control logic 80, allows the current to pass through.

In the case that HART device is an actuator, a current must be set for the current loop (not shown) in order to control the actuator. Programmable channel control logic 80 will send a digital current setting instructions ("MACMD"), through DAC 57, to current regulator 55 to set a specified DC current for the current loop (not shown). If HART device is an actuator, voltage modulator 50 is set, by programmable channel control logic 80 to a steady state low voltage. Further, ADC 45 is provided to receive a response voltage ("DCLEVEL") from the actuator.

In either case of a sensor or an actuator for HART device, channel interface component 30 further includes a switch 49 to select the response signal, which is then passed to a filter 46 to extract HART tones from the measured current and provides the HART tones to a modem 48 and to programmable channel control logic 80. Although modem 48 is shown within channel interface component 30, it is understood that modem 48 may be included within programmable channel control logic 80. Channel interface component 30 also includes an isolation barrier 60 configured to isolate channel interface component 30 from programmable channel control logic 80. Isolation barrier 60 also isolates all other circuitry following through to terminals 105, 110. This allows for galvanic isolation of each channel 30 for electrical safety and isolation.

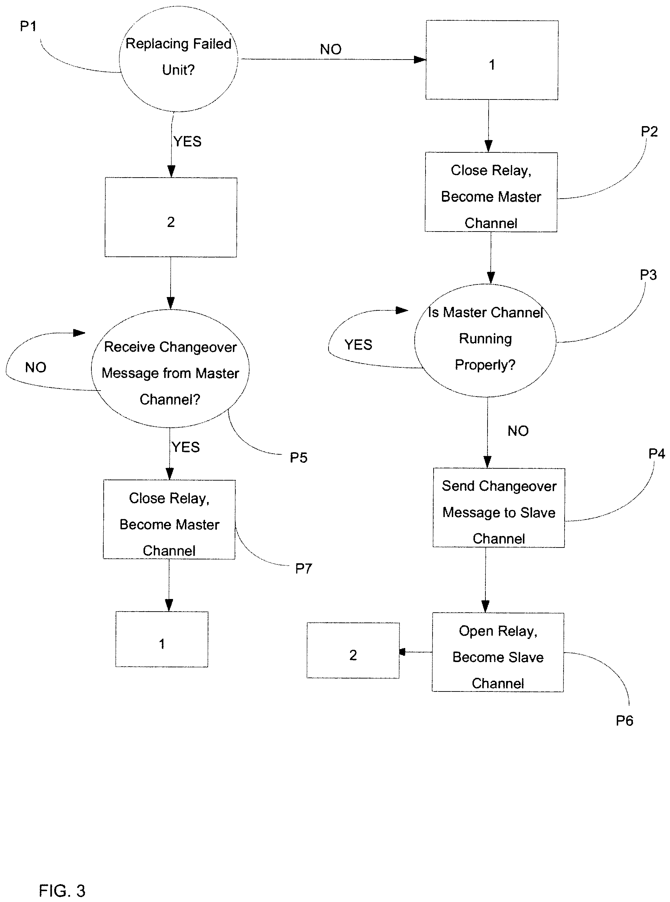

Turning now to FIG. 3, an operational embodiment of system 10 will now be described with references to FIGS. 1 and 2. Although system 10 will be described as including a first HART channel 100 and a second HART channel 200, it is understood that system 10 may include any number of HART channels as the environment requires. Further, it is understood that these operations occur separately within each channel 100, 200, such that channel 100 may be interacting with channel 200. Additionally, channel 100 and channel 200 may be on separate hardware components and each include a separate programmable control logic 80, such that system 10 is interacting with multiple devices.

At process P1, whether a failed unit is being replaced is determined. If "no", for example, with HART channel 100, programmable channel control logic 80 instructs suicide relay switch 35 of channel interface component 30 to close contacts 37, 39 to connect HART channel 100, by terminals 105, 110, to HART device. HART channel 100 is now the "master". If "yes", for example, with HART channel 200, programmable channel control logic 80 instructs suicide relay switch 35 of channel interface component 30 to leave contacts 37, 39 open so that HART channel 200 is disconnected from HART device and HART channel 100 is now the "slave".

Following along with the example of HART channel 100 as the "master" channel, at process P3, HART channel 100 is continually checked to determine if HART channel 100 is running properly. If "no", at process P4, a changeover message is sent to HART channel 200 (i.e., the "slave" channel). At process P5, the changeover message is received by HART channel 200. At process P6 and P7, programmable channel control logic 80 will instruct suicide relay switch 35 of HART channel 100 (i.e., the "master" channel) to open contacts 37, 39 to disconnect HART channel 100 from HART device, and also instruct suicide relay switch 35 of HART channel 200 (i.e., the "slave" channel) to close contacts 37, 39 to connect HART channel 200 to HART device. In this way, HART channel 200 becomes the "master" channel and HART channel 100 can be replaced and become the "slave" channel.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A circuit for providing redundant highway addressable remote transfer (HART) channels, comprising: a redundant pair of channel interface components (30), each having an input terminal (105, 205) and an output terminal (110, 210) configured to connect with a common HART device, wherein each channel interface component (30) includes circuitry for implementing a current loop with the common HART device to operate in a range of 4 to 20 milliamperes; and
a programmable logic device (80) coupled to a suicide relay switch (35) in each channel interface component (30) for alternatively activating and deactivating the redundant pair of channel interface components (30) by connecting and disconnecting respective current loops to provide a master channel and a slave channel, wherein the programmable logic device is programmable to operate the redundant pair of channel interface components to receive HART protocol current signals from a sensor or send HART protocol current signals to an actuator;
wherein each channel interface component includes:
a loop voltage supply (40) for powering the current loop, wherein the loop voltage is controlled by a digital signal from the programmable logic device that is passed through a digital to analog converter, DAC;
a voltage modulator (50) and a current regulator (55) arranged in series with a ground, wherein the voltage modulator (50) provides tones by modulating the voltage across the terminals while operating the redundant pair of channel interface components to receive HART protocol current signals from a sensor, and the current regulator provides a current
specified from the programmable logic device onto the current loop while operating the redundant pair of channel interface components to send HART protocol current signals to an actuator. and
an isolation barrier that isolates the channel interface component from the programmable logic device.

2. The circuit according to claim 1, wherein each channel interface component (30) includes a first switchable contact (37) coupled between the loop voltage supply and the output terminal and a second switchable contact (39) coupled between the input terminal and the current regulator.

3. The circuit according to claim 2, wherein the first and second switchable contacts are controllable in tandem by the suicide relay switch to activate and deactivate the channel interface components (30).

4. The circuit according to claim 1, wherein the current regulator in each channel interface component (30) is controlled by a signal from the programmable logic device via a second DAC (57), wherein the signal saturates the current regulator while operating the redundant pair of channel interface components to receive HART protocol current signals from a sensor and sets a current for the current loop while operating to send HART protocol current signals to an actuator.

5. The circuit according to claim 1, further comprising a resistor (Rsense) coupled in series between the voltage modulator and current regulator to capture a sensor response while operating the redundant pair of channel interface components to receive HART protocol current signals from a sensor.

6. The circuit according to claim 5, further comprising:
a filter for extracting HART tones from the sensor response; and
a modem for processing the HART tones.

## Patentansprüche

1. Eine Schaltung zum Bereitstellen redundanter HART (Highway Addressable Remote Transfer)-Kanäle, umfassend:
ein Paar Kanalschnittstellenkomponenten (30) mit Redundanz, die jeweils einen Eingangsanschluss (105, 205) und einen Ausgangsanschluss (110, 210) aufweisen, welche für die Verbindung mit einer gemeinsamen HART-Vorrichtung ausgelegt sind, wobei jede Kanalschnittstellenkomponente (30) Schaltungen zur Implementierung einer Stromschleife mit der gemeinsamen HART-Vorrichtung aufweist, um in einem Bereich von 4 bis 20 Milliampere betrieben zu werden; und
eine speicherprogrammierbare Vorrichtung (80), die mit einem Selbstmordrelaisschalter (35) in jeder Kanalschnittstellenkomponente (30) gekoppelt ist, um das Paar Kanalschnittstellenkomponenten (30) mit Redundanz im Wechsel zu aktivieren bzw. zu deaktivieren, indem jeweilige Stromschleifen verbunden bzw. getrennt werden,
um einen Master-Kanal und einen Slave-Kanal bereitzustellen, wobei die speicherprogrammierbare Vorrichtung dafür programmierbar ist, das Paar Kanalschnittstellenkomponenten mit Redundanz dazu zu betreiben, Stromsignale des HART-Protokolls von einem Sensor zu empfangen oder Stromsignale des HART-Protokolls an ein Betätigungselement zu senden;
wobei jede Kanalschnittstellenkomponente aufweist:
eine Schleifenspannungsversorgung (40) zum Versorgen der Stromschleife mit Betriebsstrom, wobei die Schleifenspannung durch ein digitales Signal von der speicherprogrammierbaren Vorrichtung gesteuert wird, das durch einen Digital-Analog-Wandler (Digital to Analog Converter, DAC) geschickt wird;
einen Spannungsmodulator (50) und einen Stromregler (55), die in Reihe mit einer Erde angeordnet sind, wobei der Spannungsmodulator (50) Impulse bereitstellt, indem die Spannung über die Anschlüsse moduliert wird, während das Paar Kanalschnittstellenkomponenten mit Redundanz dazu betrieben wird, Stromsignale des HART-Protokolls von einem Sensor zu empfangen, und der Stromregler einen spezifizierten Strom von der speicherprogrammierbaren Vorrichtung in der Stromschleife bereitstellt, während das Paar Kanalschnittstellenkomponenten mit Redundanz dazu betrieben wird, Stromsignale des HART-Protokolls an ein Betätigungselement zu senden; und
eine Isolationsbarriere, die die Kanalschnittstellenkomponente von der speicherprogrammierbaren Vorrichtung isoliert.

2. Die Schaltung gemäß Anspruch 1, wobei jede Kanalschnittstellenkomponente (30) einen ersten schaltbaren Kontakt (37), der zwischen die Schleifenspannungsversorgung und den Ausgangsanschluss gekoppelt ist, und einen zweiten schaltbaren Kontakt (39), der zwischen den Eingangsanschluss und den Stromregler gekoppelt ist, aufweist.

3. Die Schaltung gemäß Anspruch 2, wobei der erste und der zweite schaltbare Kontakt zusammen durch den Selbstmordrelaisschalter steuerbar sind, um die Kanalschnittstellenkomponenten (30) zu aktivieren bzw. zu deaktivieren.

4. Die Schaltung gemäß Anspruch 1, wobei der Stromregler in jeder Kanalschnittstellenkomponente (30) durch ein Signal von der speicherprogrammierbaren Vorrichtung über einen zweiten DAC (57) gesteuert wird, wobei das Signal den Stromregler sättigt, während das Paar Kanalschnittstellenkomponenten mit Redundanz dazu betrieben wird, Stromsignale des HART-Protokolls von einem Sensor zu empfangen, und während des Betriebs zum Senden von Stromsignalen des HART-Protokolls an ein Betätigungselement einen Strom für die Stromschleife einstellt.

5. Die Schaltung gemäß Anspruch 1, ferner einen Widerstand (Rsense) umfassend, der in Reihe zwischen den Spannungsmodulator und den Stromregler gekoppelt ist, um eine Sensorantwort zu erfassen, während das Paar Kanalschnittstellenkomponenten mit Redundanz dazu betrieben wird, Stromsignale des HART-Protokolls von einem Sensor zu empfangen.

6. Die Schaltung gemäß Anspruch 5, ferner umfassend:
einen Filter zum Extrahieren von HART-Impulsen aus der Sensorantwort; und
ein Modem zum Verarbeiten der HART-Impulse.

## Revendications

1. Circuit permettant de fournir des canaux redondants de type transfert à distance adressable par bus (HART), le circuit comprenant : une paire redondante de composants d'interface canal (30), possédant chacun une borne d'entrée (105, 205) et une borne de sortie (110, 210) configurées pour être connectées à un dispositif HART commun, chaque composant d'interface canal (30) comportant des circuits permettant de mettre en oeuvre une boucle de courant avec le dispositif HART commun pour assurer un fonctionnement dans une plage allant de 4 à 20 milliampères ; et
un dispositif logique programmable (80) couplé à un commutateur à relais suicide (35) dans chaque composant d'interface canal (30) permettant d'activer et de désactiver en alternance la paire redondante de composants d'interface canal (30) en connectant et en déconnectant des boucles de courant respectives afin de fournir un canal maître et un canal esclave, le dispositif logique programmable étant programmable pour faire fonctionner la paire redondante de composants d'interface canal pour qu'elle reçoive des signaux de courant sous protocole HART en provenance d'un capteur ou pour qu'elle envoie des signaux de courant sous protocole HART à un actionneur ;
chaque composant d'interface canal comportant :
une alimentation en tension de boucle (40) permettant d'alimenter la boucle de courant, la tension de boucle étant commandée par un signal numérique en provenance du dispositif logique programmable qui passe par un convertisseur numérique-analogique, DAC ;
un modulateur de tension (50) et un régulateur de courant (55) montés en série avec la terre, le modulateur de tension (50) fournissant des tonalités en modulant la tension aux bornes tout en faisant fonctionner la paire redondante de composants d'interface canal pour qu'elle reçoive des signaux de courant sous protocole HART en provenance d'un capteur, et le régulateur de courant fournissant un courant spécifié en provenance du dispositif logique programmable sur la boucle de courant tout en faisant fonctionner la paire redondante de composants d'interface canal pour qu'elle envoie des signaux de courant sous protocole HART à un actionneur ; et
une barrière d'isolation qui isole le composant d'interface canal du dispositif logique programmable.

2. Circuit selon la revendication 1, dans lequel chaque composant d'interface canal (30) comporte un premier contact commutable (37) couplé entre l'alimentation en tension de boucle et la borne de sortie, et un deuxième contact commutable (39) couplé entre la borne d'entrée et le régulateur de courant.

3. Circuit selon la revendication 2, dans lequel les premier et deuxième contacts commutables sont commandables en tandem par le commutateur à relais suicide pour activer et désactiver les composants d'interface canal (30).

4. Circuit selon la revendication 1, dans lequel le régulateur de courant dans chaque composant d'interface canal (30) est commandé par un signal en provenance du dispositif logique programmable via un deuxième DAC (57), le signal saturant le régulateur de courant alors que la paire redondante de composants d'interface canal fonctionne pour recevoir des signaux de courant sous protocole HART en provenance d'un capteur, et établissant un courant pour la boucle de courant pendant une fonctionnement pour envoyer des signaux de courant sous protocole HART à un actionneur.

5. Circuit selon la revendication 1, comprenant en outre une résistance (Rsense) montée en série entre le modulateur de tension et le régulateur de courant dans le but de capturer une réponse de capteur alors que la paire redondante de composants d'interface canal fonctionne pour recevoir des signaux de courant sous protocole HART en provenance d'un capteur.

6. Circuit selon la revendication 5, comprenant en outre :
un filtre permettant d'extraire des tonalités HART de la réponse de capteur ; et
un modem permettant de traiter les tonalités HART.
